# FASCICULE DE BREVET EUROPEEN

(11) **EP 0 327 462 B1**
(45) Date de publication et mention de la délivrance du brevet: **29.12.1993**
(21) Numéro de dépôt: 89400300.3
(22) Date de dépôt: 02.02.1989
(51) Int. Cl.: G03B 42/02, A61B 6/06, G21K 1/02

(54) **Cassette pour grille antidiffusante animée**
Kassette für vibrierendes Antidiffusionsraster
Cassette for a vibrating anti-diffusing diaphragm

(30) Priorité: 05.02.1988 FR 8801363
(43) Date de publication de la demande: 09.08.1989
(73) Titulaire: GENERAL ELECTRIC CGR S.A., F-92130 Issy les Moulineaux (FR)
(72) Inventeur: Tirelli, Marco, F-75116 Paris (FR); Ploix, Jean-Luc, F-75116 Paris (FR); Collet, Patrice, F-75116 Paris (FR); Romeas, René, F-75116 Paris (FR)
(74) Mandataire: Ballot, Paul Denis Jacques

(56) Documents cités:
- EP-A- 0 127 073
- FR-A- 947 082
- FR-A- 1 155 875
- US-A- 2 204 347
- US-A- 3 163 989

## Description

La présente invention a pour objet une cassette pour appareil de radiographie, notamment pour un mammographe, comportant une grille anti-diffusante. Un mammographe, dit aussi sénographe est un appareil d'examen radiologique du sein. L'invention trouve ainsi plus particulièrement son application dans le domaine médical où, en radiographie, on cherche à limiter les effets d'un rayonnement X diffusé. Elle peut néanmoins trouver son application dans d'autres domaines. Par exemple elle peut aussi être utilisée dans le contrôle non destructif où la radiographie X est employée.

Un objet irradié par une source de rayons X absorbe une partie du rayonnement. La mesure de cette absorption par un détecteur, notamment par une plaque sensible, rend compte de la répartition des parties de la structure interne de cet objet en fonction des différentes densités d'absorption radiologique correspondantes que le rayonnement a trouvé sur son passage en traversant cet objet. Cependant l'objet soumis à ce rayonnement crée aussi un rayonnement secondaire, omni-directionnel, appelé diffusé. Cette radiation secondaire parasite est fonction de plusieurs paramètres et plus particulièrement du volume de l'objet. Non seulement elle dégrade la qualité du cliché, mais de plus elle noie les détails de la structure de cet objet révélés par son image. Le seul moyen efficace d'atténuer l'importance du rayonnement diffusé est d'interposer entre cet objet et le détecteur, une plaque sensible, une grille anti-diffusante jouant un rôle sélecteur.

On connaît des grilles anti-diffusantes dans le domaine médical. Elles sont constituées par des lamelles opaques (plomb) dont le chant est focalisé sur le foyer du tube à rayons X émetteur du rayonnement. Les lamelles sont séparées les unes des autres par des intercalaires transparents aux rayonnements (en général en mamographie ces intercalaires contiennent des fibres : du coton, ou du papier). Une bonne partie des rayons X ayant une incidence oblique par rapport à l'orientation de ces lamelles est alors absorbée par ces lamelles et ne se propage pas jusque sur le cliché. L'absorption de ces rayons diffusés est liée à la hauteur des lamelles comparée à la largeur des intercalaires, et à la position de la grille par rapport à l'objet et par rapport à la plaque sensible. D'une manière connue la grille est placée pour une meilleure efficacité le plus près possible de la plaque sensible. Pour un bon compromis entre l'atténuation du rayonnement diffusé et l'énergie communiquée au patient , il est admis maintenant que la largeur des intercalaires doit être au plus égale au cinquième de la hauteur des lamelles.

La présence de ces grilles qui réduisent les effets du rayonnement diffusé est en elle-même génératrice d'un inconvénient : les ombres des lamelles sont portées par le cliché. Même si les lamelles sont sur chant leurs ombres sont gênantes. Pour éviter cet inconvénient on a pris l'habitude, durant le temps de pose du cliché, de déplacer la grille par rapport à la plaque. Il en résulte que l'ombre portée dans l'image par les lamelles est répartie sur toute la plaque de telle façon qu'elle y agisse comme une composante continue (négative) uniformément répartie du rayonnement à détecter. En agissant ainsi l'inconvénient de l'ombre est supprimé. Cependant, cette manière d'agir n'est efficace que pour des poses longues. Une pose longue est par exemple une pose durant de l'ordre d'une seconde. Pour des poses courtes, par exemple de 250 millisecondes, on voit réapparaître les ombres des lamelles.

En pratique, en particulier pour les mammographes, le nombre de lamelles au centimètre est de l'ordre de 30. On sait que pour les poses courtes l'augmentation du nombre de lamelles au centimètre, en continuant à animer la grille d'une même manière, est efficace pour éliminer l'ombre. On connaît par exemple des grilles dont la densité de lamelles au centimètre est de l'ordre de 80. Ces dernières peuvent même être employées fixes. L'inconvénient de ces dernières grilles est que, pour des raisons technologiques, les intercalaires sont alors en aluminium. Or l'aluminium absorbe plus que la fibre les rayons X. Un examen de mammographie est destiné à montrer des calcifications de petites tailles d'une part et de densités radiologiques peu différenciées d'autre part. Aussi l'atténuation trop forte apportée par des intercalaires en aluminium devrait être compensée par une irradiation plus forte de la patiente. Pour diverses raisons, ne serait-ce que dans un but de limitation des doses reçues par une patiente qui subit un tel examen, et surtout en prévision d'un dépistage systématique et préventif, cette augmentation du rayonnement ne peut être admise.

Actuellement la technologie de fabrication des grilles, bute sur des limites de performance. On peut disposer de grilles dont le pas de répartition des lamelles vaut environ 300 micromètres avec des lamelles elles-mêmes épaisses d'environ 20 micromètres, ou des grilles dont le pas de répartition des lamelles vaut 240 micromètres avec des lamelles épaisses de 36 micromètres. Mais on ne dispose pas de grilles dont le pas de répartition des lamelles soit de l'ordre de 240 micromètres avec des lamelles épaisses d'environ 18 micromètres. Les lamelles épaisses de 36 micromètres ne conviennent pas pour les mammographes : leur ombre portée est dans tous les cas trop grande. Les lamelles plus fines, de 18 micromètres, peuvent convenir mais leur pas de répartition est si grand qu'elles ne sont pas adaptées aux poses courtes.

Les dispositifs connus de mise en mouvement des grilles comportent des petits motoréducteurs dont l'arbre est terminé par une came. Cette came entraîne en déplacement alternatif une tige fixée latéralement à la grille. La tige est guidée et est maintenue dans un coulisseau. Le poids de la tige, de celui de son système de fixation à la grille, et de la grille elle-même est de l'ordre de 350 grammes. En pratique les constructeurs de petits motoréducteurs ne garantissent pas le fonctionnement de l'animation de la grille au delà de 4 Hertz. Il est possible d'envisager des motoréducteurs plus rapides, ainsi qu'une tringlerie plus robuste pour accepter des fréquences d'oscillation plus élevées. Cependant, d'une part ces moyens plus robustes sont plus encombrants, et d'autre part l'inertie de la grille devient alors telle que son déplacement peut se transformer en un déplacement avec torsion de la tige et du système de fixation. Il en résulte quelques modifications de l'orientation des lamelles dans leur plan. Globalement la durée statistique de présence des lamelles au dessus d'un endroit quelconque de la plaque n'est pas constante quel que soit cet endroit. Aux endroits où cette probabilité de présence est plus grande on voit réapparaître le phénomène gênant de l'ombre portée par les lamelles.

En outre, pour résoudre au mieux ces problèmes de probabilité de présence il convient de modifier le profil des cames. Cette opération qui nécessite le démontage, l'usinage et le remontage de la came pour chaque cas n'est pas envisageable. En pratique elle n'est pas entreprise et les appareils fonctionnent avec des cames standard n'ayant pas le meilleur rendement pour une large gamme de fréquences de la mise en mouvement de la grille. Par ailleurs les cames peuvent s'user de sorte que petit à petit le phénomène d'ombrage réapparaît avec l'âge du mammographe. Enfin, les cames possèdent des points de rebroussement. Pour des raisons technologiques il importe de ne pas démarrer une pose alors que la tige porte sur un point de rebroussement de la came. Ceci nécessite des réglages complexes dont on cherche à se passer. Faute de faire ces réglages, une pose peut démarrer sur un point de rebroussement ce qui dégrade la qualité du cliché.

L'invention a pour objet de supprimer tous ces problèmes en mettant en mouvement la grille directement, sans intermédiaire, en supprimant la came, la tige de mise en mouvement et la fixation latérale. A cette fin, la grille est animée directement par l'arbre de sortie d'un système vibrant tel qu'un pot vibrant. Par exemple un tel pot peut-être constitué par un noyau magnétique plongé dans une bobine. Ce noyau est soumis à des déplacements alternatifs, au travers de cette bobine, par un courant électrique qui parcourt cette bobine. Autrement dit la grille est directement solidaire du système vibrant. Celui-ci peut aussi être constitué par des conducteurs électriques fixés à cette grille et placés dans un champ magnétique. Les conducteurs peuvent être enroulés (comme par exemple ceux d'une bobine de haut parleur) ou linéaires. Le déplacement de l'ensemble grille-conducteurs est déterminé par le sens du courant électrique : un courant alternatif fait vibrer l'ensemble à la même fréquence. La transmission à la grille est alors une transmission directe : l'inertie de la tringlerie peut être réduite au minimum. Elle peut même être complètement supprimée. En outre, en jouant directement sur l'allure temporelle du signal qui alimente les bobines, on peut modifier simplement, pour chaque fréquence, le diagramme de répartition statistique des positions des lamelles au-dessus de la plaque pendant la pose, de telle façon que ce diagramme soit le plus plat possible. En pratique de 350 grammes à mettre en mouvement, on tombe avec une telle structure au seul poids de la grille, à environ 250 grammes. Le poids de la tringlerie peut être réduit voir supprimé par l'emploi de matériaux légers. On remarque en outre que cette tringlerie ne travaille plus qu'en traction ou en compression, là ou ses coefficients sont naturellement les plus forts. Il n'y a plus de torsion parasite. Avec un pot vibrant, il a été possible en animant la grille à 15 Hertz, d'effacer les ombres de la plaque pour des temps de pose très courts, de l'ordre de 100 millisecondes. Dans ce cas l'amplitude crête-crête de déplacement des lamelles était de l'ordre de 4 millimètres. De plus l'élimination des torsions est obtenue par alignement, dans le sens de la transmission du mouvement, du centre de gravité de la grille avec le centre d'application de ce mouvement.

Le brevet US-A-2 204 347 décrit un dispositif d'animation d'une grille antidiffusante qui met en oeuvre une bobine dont le noyau attire la grille puis la relâche selon un fonctionnement tout ou rien (figure 8). Un tel dispositif ne permet pas de déplacer la grille selon des mouvements ayant des courbes temporelles particulières, notamment en dents de scie.

L'invention concerne donc une cassette pour grille antidiffusante animée selon une des revendications 1 à 6.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : une cassette pour un mammographe selon l'invention;
- figure 2 : un exemple de moyens moteurs pour mettre la grille en mouvement;
- figure 3 : une variante de ces moyens moteurs;
- figure 4 : une forme préférée d'un signal électrique applicable à un pot vibrant.

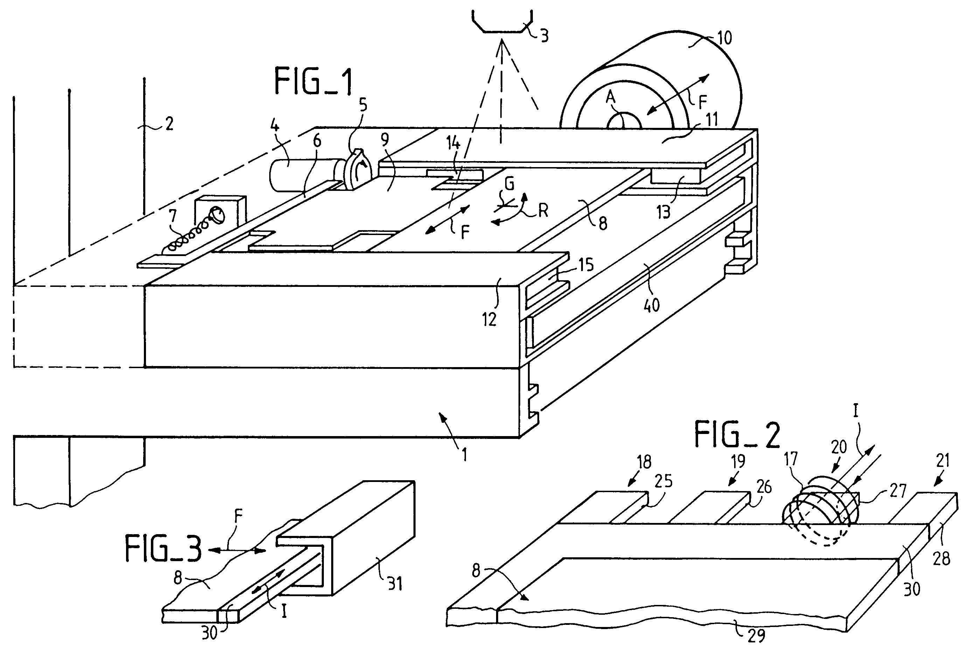

La figure 1 représente une cassette pour une grille anti-diffusante animée selon l'invention. Cette cassette 1 est notamment destinée à être montée sur un mammographe comportant une potence 2 qui supporte un tube à rayons X 3 émettant une irradiation correspondante en direction de la cassette 1. A gauche de la cassette 1 est montré le dispositif de mise en mouvement de l'état de la technique (entouré en tirets). Il comportait un servo-moteur 4 qui faisait tourner une came 5 en forme de coeur. Cette came entraînait en déplacement linéaire une tige 6 maintenue par ailleurs dans un coulisseau non représenté. La tige 6 était ramenée vers la came 5 par l'action d'un ressort 7 de rappel. La tige 6 était solidarisée de la grille anti-diffusante 8 par une entretoise 9 robuste dont le rôle consistait à provoquer un déplacement de la grille 8 parallèlement à la tige 6 (flèche F) tout en évitant le plus possible une rotation parasite (flèche R) malheureusement irrémédiable lorsque la vitesse de rotation de l'arbre du moteur 4 était trop élevée.

Dans l'invention on évite cette rotation parasite R ainsi que le poids excessif de la tige 6, du ressort 7, et de l'entretoise 9 en plaçant sensiblement dans l'alignement, selon le sens du mouvement à imprimer F, du centre de gravité G de la grille 8, un pot vibrant 10. A l'endroit du centre A d'application du mouvement la grille est soumise au mouvement F. La grille 8 se déplace sous l'effet du mouvement F entre deux glissières en vis à vis respectivement 11 et 12 et dans lesquelles elle porte sans frottement : de préférence en munissant ses surfaces de repos de polytétrafluoroéthylène. Pour maintenir la grille en déplacement parallèlement à elle-même les deux glissières 11 et 12 peut comporter des taquets de guidage tels que 13 à 15.

Dans une autre configuration, la grille 8 peut reposer sur des lames souples dont la principale caractéristique est que la fréquence d'excitation de la grille coïncide avec la fréquence de résonance de l'ensemble. La grille peut aussi être solidaire de lames ressorts, fixées d'une part au châssis de la cassette et d'autre part aux cotés de la grille. Les dimensions de ces lames sont calculées pour faire coïncider les deux fréquences utiles.
Le principe de fonctionnement d'un pot vibrant peut être mieux saisi à l'examen de la figure 2. Dans un tel pot, une bobine mobile telle que la bobine 17 est placée dans un champ magnétique existant dans l'entrefer d'un circuit magnétique. Le circuit magnétique, non représenté, peut comporter un aimant annulaire et une plaque de champ. La bobine 17 est mise en mouvement par un courant électrique I qui la parcourt. Selon le sens du courant, la bobine 17 est déplacée dans un sens ou dans un autre. En utilisant un courant alternatif, on provoque un déplacement aller et retour. Dans un perfectionnement de l'invention le pot vibrant 10 est remplacé par plusieurs dispositifs du même type par exemple tels que 18 à 21. Chacun de ces dispositifs répartis uniformément sur les cotés de la grille comporte une bobine mobile solidaire de la grille 8. Par exemple la grille 8 peut comporter des dents, respectivement 25 à 28, qui s'étendent, au travers de la glissière 11 dans des lumières ménagées à cet effet et autour desquelles sont enroulées les bobines 17. Les différents moteurs ainsi réalisés sont alignés perpendiculairement à la direction F du mouvement à transmettre. Un autre alignement de tels moteurs peut être réalisé dans la glissière en vis à vis. Cette multiplicité des moteurs peut avoir deux avantages. D'une part elle permet la miniaturisation des moyens d'entraînement de la grille. D'autre part elle permet, éventuellement, l'excitation des différentes bobines, dont celles en vis à vis, avec des signaux soit déphasés les uns par rapport aux autres, soit de fréquences différentes, de manière à imprimer à la grille un mouvement qui ne serait pas nécessairement linéaire F mais qui pourrait être quelconque dans le but de provoquer un mouvement de cette grille dans lequel la statistique de position des lamelles au dessus de la plaque sensible soit la plus uniforme possible au cours du cliché. Ce mouvement différerait de la rotation R en ce sens qu'il serait imposé par les moteurs et qu'il ne serait pas uniquement une conséquence de l'inertie de la grille. En outre les signaux qui attaqueraient les différentes bobines pourraient être des signaux aléatoires ou pseudo-aléatoires.

La cassette 1 comporte sous la grille 8 un accès pour y introduire une plaque sensible 40. Il est à remarquer que la présence du pot vibrant 10 peut gêner l'accès latéral de la plaque sensible 40 dans la cassette 1. Ce pot vibrant n'est cependant pas gênant par son encombrement puisqu'il peut-être placé sur le côté de la grille, à l'arrière par rapport à une présentation latérale du sein. En outre il est possible de prévoir, en face du pot 10, un accès qui serait latéral si l'on veut continuer à bénéficier d'une normalisation d'insertion des plaques sensibles qui veut qu'elles soient introduites latéralement. Enfin, la cassette 1 comporte classiquement des glissières de fixation sur la table du mammographe. La table est solidaire de la potence 2. Les profils des glissières de la table sont complémentaires des profils des glissières pour assurer une mise en place ou un enlèvement rapide de la cassette.

La figure 2 montre encore une grille 8 classique dans laquelle la partie 29 de colimation proprement dite est entourée d'une monture 30 en aluminium qui en assure la rigidité. La monture 30 a une forme de U pour ne pas comporter d'aluminium près du bord avant, par là ou doit être présenté un sein à radiographier.

La figure 3 montre schématiquement un système à excitation électrodynamique 31 monté à l'extrémité de la grille 8 pour la mettre en mouvement selon la flèche F. Dans ce système un courant, par exemple alternatif I, passe à travers la monture 30. En variante la monture 30 est en un matériau magnétique et le système produit un champ magnétique alternatif correspondant au déplacement de la grille 8 selon la flèche F. On peut utiliser, pour assurer un double effet, deux excitateurs électrodynamiques en vis à vis l'un de l'autre. Chaque moteur peut être agencé dans une des glissières par exemple.

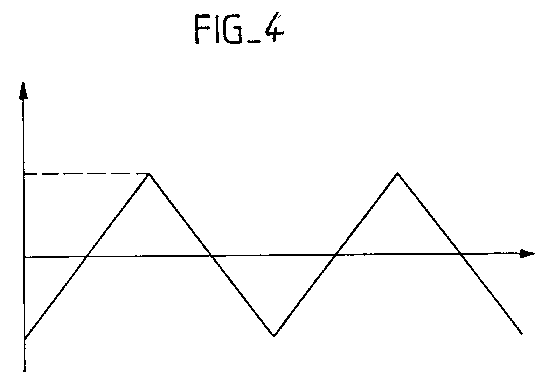

En choisissant correctement le signal électrique d'attaque du pot vibrant 10, ou de l'excitateur électrodynamique, ou ce qui revient au même, le signal d'attaque des bobines telles que, 17, on peut faire en sorte que pour des durées d'examen très courtes de l'ordre de quelques dizaines de millisecondes, la trame ne soit pas visible sur les clichés. Avec un signal triangulaire tel que représenté sur la figure 4, provoquant un déplacement crête-crête de quelques millimètres à une fréquence de 15 Hertz de la grille 8, les lamelles commencent à apparaître pour des durées d'exposition inférieures à 100 millisecondes.

Il est possible d'obtenir un meilleur résultat en attaquant l'excitateur avec un signal simuoïdal de fréquence supérieure : l'amplitude crête-crête est réduit ultérieurement et les problèmes de défocalisations sont mieux maîtrisés.

Compte tenu de ce qu'il existe sur le marché, des générateurs de signaux susceptibles de produire des signaux électriques dont la forme est modifiable à la demande, on comprend qu'il est bien plus facile de trouver le bon compromis en modifiant cette forme du signal qu'en utilisant la came mécanique 5 de l'état de la technique cité. En pratique, du fait que les mammographes comportent des microprocesseurs de gestion, ce microprocesseur peut même être utilisé pour définir la forme du signal électrique applicable au pot vibrant ou à l'excitateur électrodynamique de mise en mouvement de la grille et qui peuvent différer d'une utilisation à une autre.

## Revendications

1. Cassette (1) pour appareil de radiographie, notamment pour un mammographe, comportant une grille antidiffusante (8), ainsi qu'un dispositif pour entraîner la grille antidiffusante (8) en vibration dans son plan, ledit dispositif comportant :
- des moyens moteur (10) comportant au moins une bobine électrique (17) et au moins un noyau magnétique, et
- des moyens d'alimentation pour appliquer un signal électrique approprié à ladite bobine (17),
caractérisée en ce que
- la grille est directement solidaire de la bobine (17) et en ce que
- ledit signal électrique approprié est un signal triangulaire.

2. Cassette selon la revendication 1, caractérisée en ce que ledit signal électrique est un signal aléatoire ou pseudo-aléatoire.

3. Cassette selon l'une des revendications 1 ou 2, caractérisée en ce que les moyens moteur (10) comportent une pluralité de bobines (17) réparties les unes à côté des autres perpendiculairement au sens (F) dudit mouvement et les moyens d'alimentation appliquent une pluralité des signaux électriques appropriés à desdites bobines (17).

4. Cassette selon la revendication 3, caractérisée en ce que les signaux électriques appliqués à ladite pluralité de bobines (17) possèdent entre eux des relations de phase déterminées.

5. Cassette selon l'une quelconque des revendications 1 à 4 caractérisée en ce que la grille (8) repose sur des lames souples.

6. Cassette selon la revendication 5 caractérisée en ce que les lames sont calculées pour que la fréquence desdits signaux électriques corresponde à la fréquence de résonance de l'ensemble grille-lames-bobines.

## Claims

1. A cassette (1) for an x-ray apparatus and more particularly for a mammography apparatus, comprising an antidiffusion grid (8) and furthermore a device for causing reciprocation of the antidiffusion grid in its own plane, the said device comprising:
- motor means (10) comprising at least one electric coil (17) and at least one magnetic armature and
- supply means for applying an appropriate electrical signal to the said coil (17),
characterized in that
- the grid is directly connected with the coil (17) and in that
- the said appropriate electric signal is a triangular signal.

2. The cassette as claimed in claim 1, characterized in that the said electric signal is a random signal or a pseudo-random signal.

3. The cassette as claimed in claim 1 or in claim 2, characterized in that the motor means (10) comprise a plurality of coils (17) distributed side by side perpendicularly to the direction (F) of the said movement and the supply means apply a plurality of appropriate electric signals to the said coils (17).

4. The cassette as claimed in claim 3, characterized in that the electric signals applied to the said plurality of coils (17) have predetermined phase relationships between them.

5. The cassette as claimed in any one of the claims 1 through 4, characterized in that the grid (8) is supported on flexible strips.

6. The cassette as claimed in claim 5, characterized in that the strips are so designed that the frequency of the said electric signals corresponds to the resonant frequency of the assembly composed of the grid, the strips and the coils.

## Patentansprüche

1. Kassette (1) für ein Röntgengerät, insbesondere für ein Mammographiegerät, das ein Antidiffusionsgitter (8) sowie eine Vorrichtung enthält, um das Antidiffusionsgitter (8) in eine Schwingbewegung in ihrer Ebene zu versetzen, wobei diese Vorrichtung enthält:
- Antriebsmittel (10), die wenigstens eine elektrische Spule (17) und wenigstens einen Magnetkern enthalten, und
- Versorgungsmittel, um ein geeignetes elektrisches Signal an die Spule (17) anzulegen,
dadurch gekennzeichnet, daß
- das Gitter direkt mit der Spule (17) fest verbunden ist und daß
- das geeignete elektrische Signal ein Dreiecksignal ist.

2. Kassette nach Anspruch 1, dadurch gekennzeichnet, daß das elektrische Signal ein zufälliges oder pseudozufälliges Signal ist.

3. Kassette nach einem der Ansprüche 1 oder 2, dadurch gekennzeichnet, daß die Antriebsmittel (10) mehrere Spulen (17) enthalten, die nebeneinander senkrecht zur Richtung (F) der Bewegung verteilt sind und daß die Versorgungsmittel mehrere geeignete elektrische Signale an diese Spulen (17) anlegen.

4. Kassette nach Anspruch 3, dadurch gekennzeichnet, daß die an die mehreren Spulen (17) angelegten elektrischen Signale bestimmte gegenseitige Phasenbeziehungen haben.

5. Kassette nach einem der Ansprüche 1 bis 4, dadurch gekennzeichnet, daß das Gitter (8) auf biegsamen Streifen aufliegt.

6. Kassette nach Anspruch 5, dadurch gekennzeichnet, daß die Streifen so bemessen sind, daß die Frequenz der elektrischen Signale der Resonanzfrequenz der aus dem Gitter, den Streifen und den Spulen bestehenden Gesamtheit entspricht.
